# EUROPEAN PATENT SPECIFICATION

(11) **EP 2 599 701 B1**
(45) Date of publication and mention of the grant of the patent: **27.08.2014**
(21) Application number: 12194389.8
(22) Date of filing: 27.11.2012
(51) Int. Cl.: B62J 37/00

(54) **Scooter-type motorcycle**
Motorroller
Motocyclette de type scooter

(30) Priority: 29.11.2011 JP 2011260729
(43) Date of publication of application: 05.06.2013
(73) Proprietor: Suzuki Motor Corporation, Shizuoka-ken 432-8611 (JP)
(72) Inventor: Minaminosono, Hiroshi, Shizuoka-Ken, 432-8611 (JP)
(74) Representative: Klunker . Schmitt-Nilson . Hirsch

(56) References cited:
- JP-A- 2005 069 232
- US-A1- 2010 243 355

## Description

### BACKGROUND OF THE INVENTION

### Field of the Invention

The present invention relates to a scooter-type motorcycle in accordance with the preamble of claim 1. Such motorcycle is provided with a discharge suppression device for fuel evaporation gas (hereinafter referred to as fuel evaporation gas discharge suppression device) provided with a canister.

### Description of the Related Art

There is known a scooter-type motorcycle including a fuel evaporation gas discharge suppression device having a canister that temporarily adsorbs a fuel evaporation gas generated in a fuel tank and purges (emits) the fuel evaporation gas to an intake system.

As described in Patent Document 1 (Japanese Patent Laid-Open Publication No. 10-324281 ), if the canister is mounted to be biased toward the same side as a muffler on a plan view of a vehicle, the canister receives heat from the muffler after operation stop of an engine and activated carbon in the canister is heated to a high temperature. In such a case, adsorption performance of a fuel evaporation gas by the canister is deteriorated.

In view of such fact, for example, Patent Document 2 (Japanese Patent Application No. 2005-69232 ) discloses, in accordance with the preamble of claim 1, a structure in which a canister is placed in a vehicle body cover in a front portion of a vehicle body so as to space the canister from a muffler.

However, generally, a fuel evaporation gas discharge suppression device having a canister purges (emits) adsorbed fuel from the canister to an intake system and burns the fuel in an engine, and because of such reason, in a structure in which the canister is excessively separated from a muffler, lengths of various hoses such as a purge hose coupling the canister and the intake system are made longer, thus being disadvantageous.

In a scooter-type motorcycle such as a small scooter including an engine unit swingable in a vertical direction of a vehicle with respect to a vehicle body frame, an intake system swings together with the engine unit. Thus, various hoses such as a purge hose having an increased length may significantly vibrate in the vertical direction and interfere with peripheral components, thereby, for example, damaging the purge hose to emit a fuel evaporation gas to an outside of the vehicle.

US-A-2010/243355 discloses a scooter-type motorcycle in which a canister of a fuel evaporation gas discharge suppression device as well as a purge control valve are attached at a position close to a rear portion of a fuel tank, wherein the fuel tank is disposed in a space in front of the driver's seat at a lower portion of the motorcycle.

### SUMMARY OF THE INVENTION

The present invention is achieved in view of the above described circumstances and an object thereof is to provide a scooter-type motorcycle capable of increasing adsorption performance of a fuel evaporation gas by a canister and preventing damage to various hoses connected to the canister.

The above and other objects can be achieved according to the present invention by providing a scooter-type motorcycle which includes the features of claim 1.

In that motorcycle, the canister is mounted to the vehicle body frame in a vicinity of and immediately above a center of a swinging motion of the engine unit on a side view of the vehicle with an upper end of the canister being located below a lower end of the intake system.

Further, the canister is mounted with a longitudinal direction thereof being directed in the vertical direction of the vehicle, the fuel tank and the canister are connected to each other through a surge hose, and the intake system and the canister are connected to each other through a purge hose, the surge hose and the purge hose being connected to an upper portion of the canister, and a canister air hose having one end opened to atmosphere is connected, at the other end, to a lower portion of the canister.

The canister is mounted to the vehicle body frame with an upper portion thereof being tilted forward of the vehicle.

Specifically, the canister includes a purge valve at a top portion thereof, the purge valve includes a canister vacuum hose connecting a diaphragm chamber thereof and the intake system, and the canister vacuum hose is provided adjacent to and substantially in parallel with the purge hose.

It may be desired that the canister vacuum hose is located at the front of a virtual line connecting an intake system side connection end and a canister side connection end in the vehicle, and essential portions thereof are provided in parallel with the virtual line on side view of the vehicle in an empty state of the vehicle.

The purge hose and the canister vacuum hose may be provided to intersect a virtual line connecting the intake system side connection end of the canister vacuum hose in the empty state of the vehicle and the center of the swinging motion of the engine unit on side view of the vehicle.

Furthermore, it may be also desired that the engine unit is set with an angle β formed between a position of the canister vacuum hose in the empty state of the vehicle and a position of the canister vacuum hose in the maximum extension state of the vehicle being smaller than an angle α formed between the position of the canister vacuum hose in the empty state of the vehicle and a position of the canister vacuum hose in a maximum pressure state of the vehicle on side view of the vehicle.

According to the present invention of the characters mentioned above, the canister can be spaced from the exhaust system, thereby preventing activated carbon in the canister from being heated to a high temperature to reduce adsorption performance of the fuel evaporation gas (HC, CO). In particular, the cylinder assembly is located between the exhaust system and the canister, thereby preventing transfer of high temperature atmosphere around the exhaust system and also radiation heat from the exhaust system to the canister.

Furthermore, since the canister is located on one side that is the side of the intake system in the cylinder assembly, the length of a hose connecting the canister and the intake system can be reduced, thus avoiding the interference between the hose and the peripheral components even when the engine unit and the intake system swing in the vertical direction of the vehicle. This arrangement can prevent damage to the hose.

The nature and further characteristic features of the present invention will be made clearer from the following descriptions made with reference to the accompanying drawings.

### BRIEF DESCRIPTION OF THE DRAWINGS

Fig. 1 is a perspective (transparent) view showing an embodiment of a scooter-type motorcycle, as viewed from left side thereof, according to the present invention;
Fig. 2 is a left side view showing a rear half portion of the scooter-type motorcycle in Fig. 1 with a frame cover being removed;
Fig. 3 is a perspective view showing the rear half portion in Fig. 2 seen from a diagonally front side of a vehicle body;
Fig. 4 is a front view showing the rear half portion in Fig. 2 seen from a front side of the vehicle body;
Fig. 5 is a plan view showing the rear half portion in Fig. 2 seen from an upper side of the vehicle body;
Fig. 6 is a perspective view showing an engine unit, an intake system, a fuel evaporation gas discharge suppression device, and so on of the vehicle body shown in Fig. 2;
Fig. 7 is a plan view of Fig. 6;
Fig. 8 is a front view of Fig. 6;
Fig. 9 is a partially enlarged side view showing surroundings of the fuel evaporation gas discharge suppression device in Fig. 6; and
Fig. 10 is a side sectional view showing a canister in Fig. 6.

### DESCRIPTION OF THE PREFERRED EMBODIMENTS

Hereunder, an embodiment for carrying out the present invention will be described with reference to the accompanying drawings.

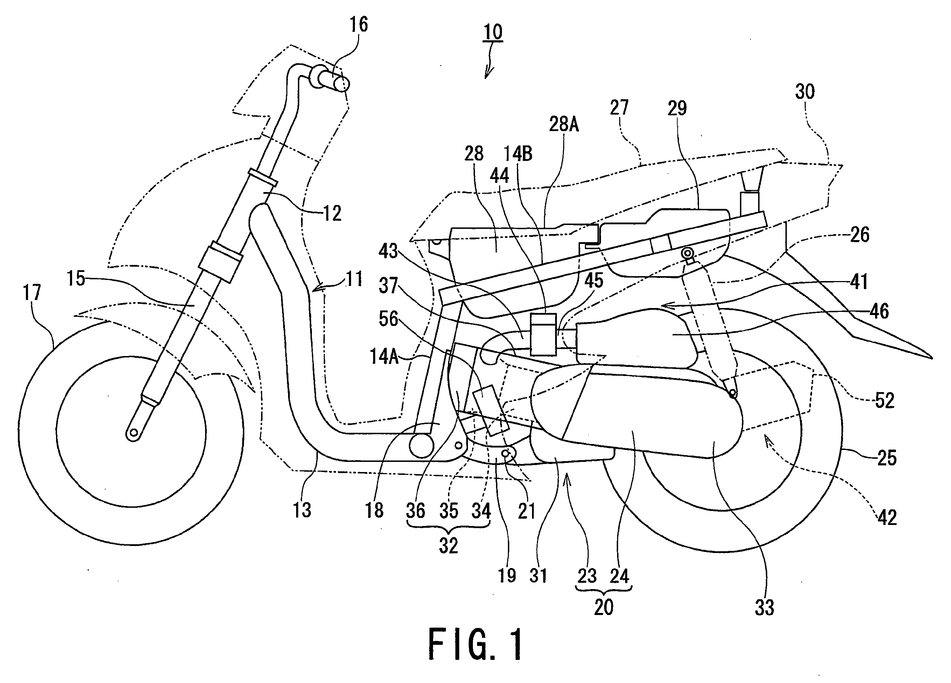

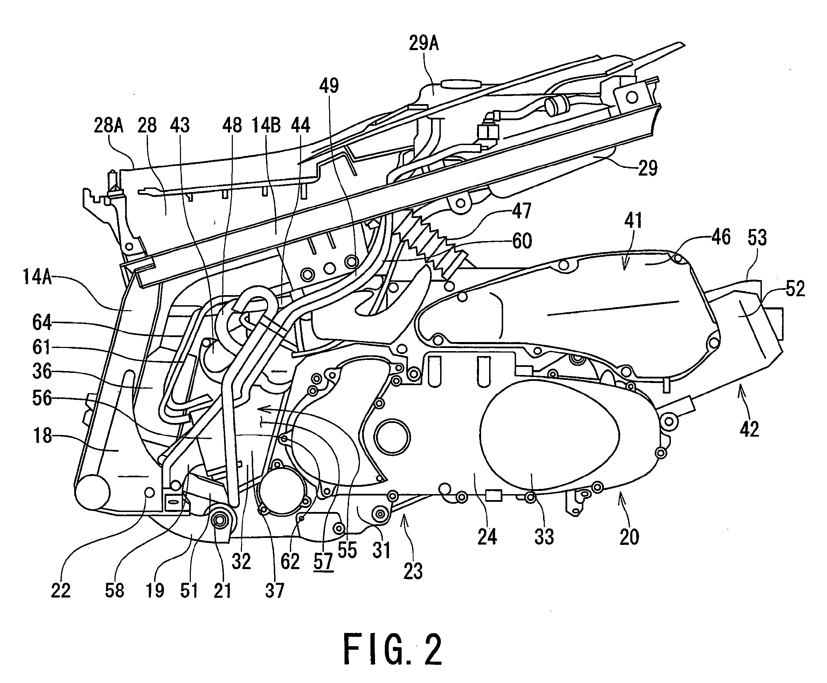

Fig. 1 is a left side perspective view showing an embodiment of a scooter-type motorcycle according to the present invention, and Fig. 2 is a left side view showing a rear half portion of the scooter-type motorcycle in Fig. 1 with a frame cover being removed. In the following description of the embodiment, terms of front, rear, left, right, upper, lower representing direction are used in the illustrated state or with reference to a rider on a vehicle.

A scooter-type motorcycle 10 includes an underbone vehicle body frame 11. In the vehicle body frame 11, one main frame 13 extends downward from a rear portion of a steering pipe 12 at a front head portion, and a pair of left and right first rear frames 14A extends rearward and obliquely upward from a lower portion of the main frame 13, and a second rear frame 14B having a U-shape in a plan view is integrated with the first rear frame 14A.

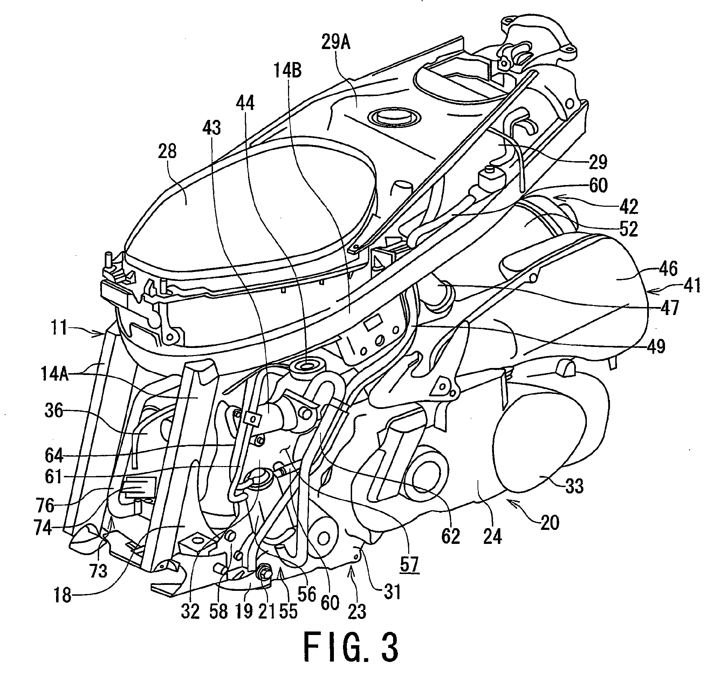

A pair of front forks 15 is supported by the steering pipe 12 laterally pivotably with a handlebar 16, and a front wheel 17 is journaled on front ends of the front forks 15. Meanwhile, as shown in Figs. 1 to 3, an engine suspension bracket 18 is mounted to a connection portion between a rear end of the main frame 13 and the first rear frame 14A. An engine unit 20 is pivotably supported by the engine suspension bracket 18 around a pivot axis 21 swingably in a vertical direction via a link member 19. The pivot axis 21 is the center of the swinging motion of the engine unit 20, and reference numeral 22 in Fig. 2 denotes the center of a swinging motion of the link member 19 on a vehicle body side with respect to the engine suspension bracket 18.

The engine unit 20 of the present embodiment is generally used for a scooter, and integrally includes an engine 23 and a transmission 24, and a rear wheel 25 is directly journaled on a rear portion of the transmission 24. A rear cushion unit 26 is vertically stretched between a rear portion of the transmission 24 and the second rear frame 14B, and the rear cushion unit 26 performs cushioning function and suspends the engine unit 20 and the rear wheel 25. Herein, the transmission 24 includes a belt-type continuously variable transmission and a final deceleration mechanism, both not shown, that change speed of and transmit rotation of the engine 23.

Above the second rear frame 14B of the vehicle body frame 11, a seat 27 is provided so as to be opened and/or closed. Under the seat 27 in the vehicle, an article housing (storage) box 28 that can house or store an article such as a helmet is disposed above a cylinder assembly 32 (described later) in the vehicle body.

A fuel tank 29 is disposed above an air cleaner 46 (described later) in the vehicle body. The article housing box 28 and the fuel tank 29 are mounted to and supported by the second rear frame 14B of the vehicle body frame 11. When the seat 27 is opened, an upper opening 28A of the article housing box 28 is also opened for putting an article such as helmet into the article housing box 28 or taking out thereof from the article housing box 28.

Front portions of the vehicle body frame 11 and the engine unit 20 are entirely covered with a frame cover 30 made of synthetic resin to improve an outer appearance of the vehicle body and protect internal components or parts of the vehicle.

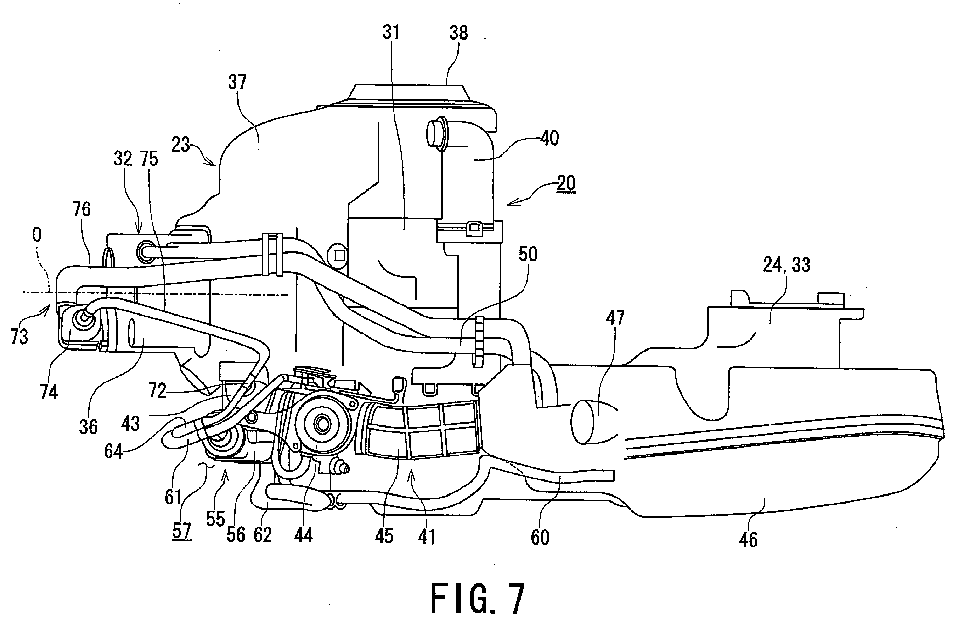

As shown in Figs. 1 and 7, the engine 23 is configured so that the cylinder assembly 32 extends forward from a crankcase 31 to be tilted forward substantially in a horizontal direction. A casing (i.e., transmission casing 33) of the transmission 24 integrally extends rearward of the vehicle body from one end side of the crankcase 31 in a vehicle width direction (left side in this embodiment). Specifically, the crankcase 31 has a structure laterally split into two sections, and a left-side crankcase portion extends rearward of the vehicle body to constitute the transmission casing 33 together with a transmission cover.

As shown in Fig. 1, the cylinder assembly 32 is configured so that a cylinder 34, a cylinder head 35, and a head cover 36 are arranged in an overlapped manner in this order from the upper side of the crankcase 31. The cylinder 34 and the cylinder head 35 are covered with a cylinder cowling 37 made of synthetic resin.

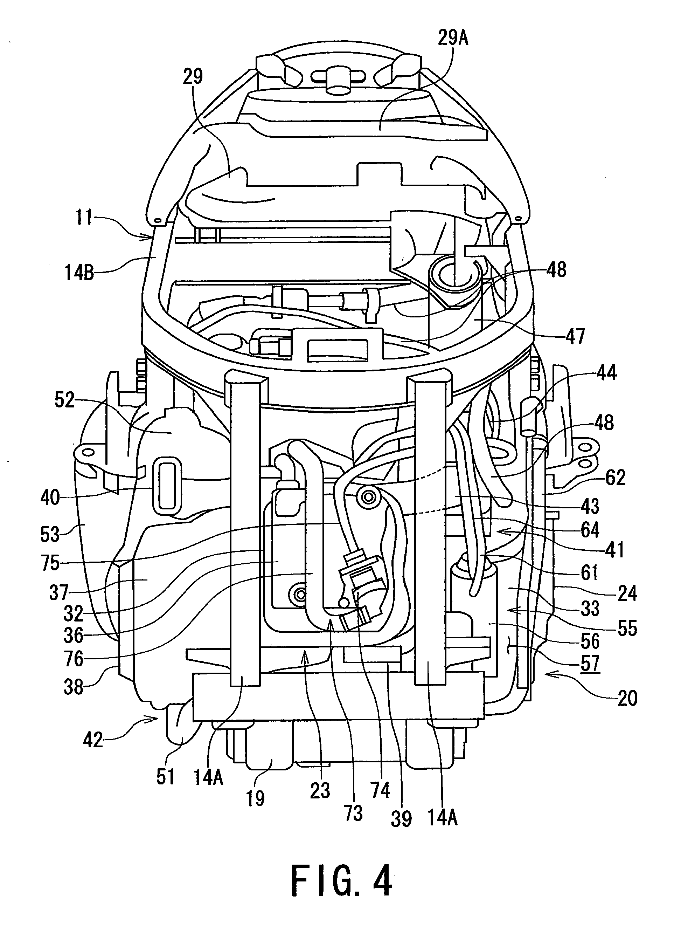

In the cylinder cowl 37, cooling air is introduced from an air introduction port 38 in Fig. 4 when a cooling fan, not shown, mounted to a crankshaft, not shown, of the engine 23 is driven (rotated) to forcedly cool the cylinder 34 and the cylinder head 35. The air introduction port 38 is opened in a right side surface of the cylinder cowling 37. The cooling air having cooled the cylinder 34 and the cylinder head 35 is discharged from an air discharge port 39 formed in a lower surface of the cylinder cowling 37.

Reference numeral 40 in Fig. 4 denotes an air duct for cooling a belt through which the air is introduced into a belt chamber in the transmission casing 33.

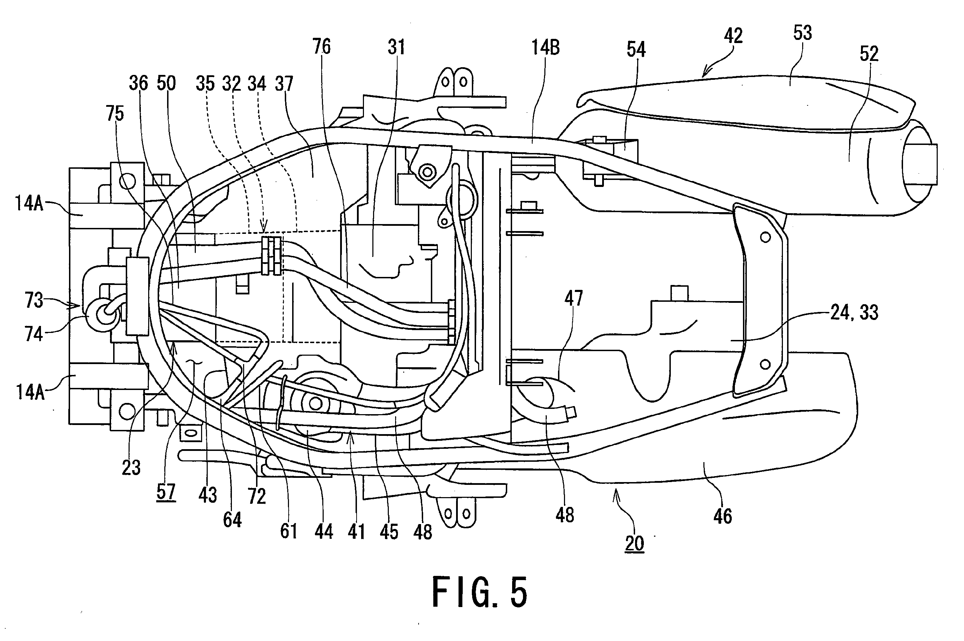

As shown in Figs. 4 to 8 (particularly, Figs. 4 and 5), an intake system 41 is connected to an upper portion of the cylinder head 35 of the cylinder assembly 32, and an exhaust system 42 is connected to a lower portion thereof. The intake system 41 and the exhaust system 42 are located on the opposite sides in the vehicle width direction with the cylinder assembly 32 therebetween and extend rearward of the vehicle. The intake system 41 is disposed above the transmission casing 33 on the same side (left side in the present embodiment) as the transmission casing 33 in the vehicle width direction.

Particularly as shown in Figs. 4 and 7, the intake system 41 includes an intake pipe 43 connected to an intake port, not shown, formed in the cylinder head 35 and extending rearward of the vehicle in a curved shape, a carburetor 44 connected to the intake pipe 43, a connecting tube 45 connected to the carburetor 44, and an air cleaner 46 connected to the connecting tube 45. An inlet pipe 47 is provided in the air cleaner 46.

Clean air from which dust is removed by the air cleaner 46 is supplied to the carburetor 44 as an intake air. The carburetor 44 introduces and atomizes a predetermined amount of fuel from the fuel tank 29 through a fuel hose 48 according to an intake amount for the intake port, and supplies the fuel to the intake port of the engine 23 (cylinder head 35) together with the intake air.

Furthermore, reference numeral 49 in Figs. 2, 3 and 6 denotes a fuel drain hose, and reference numeral 29A denotes a fuel tank cover covering an upper portion of the fuel tank 29. Reference numeral 50 in Figs. 5 to 7 denotes a breather hose that introduces a blow-by gas in the engine 23 to the air cleaner 46.

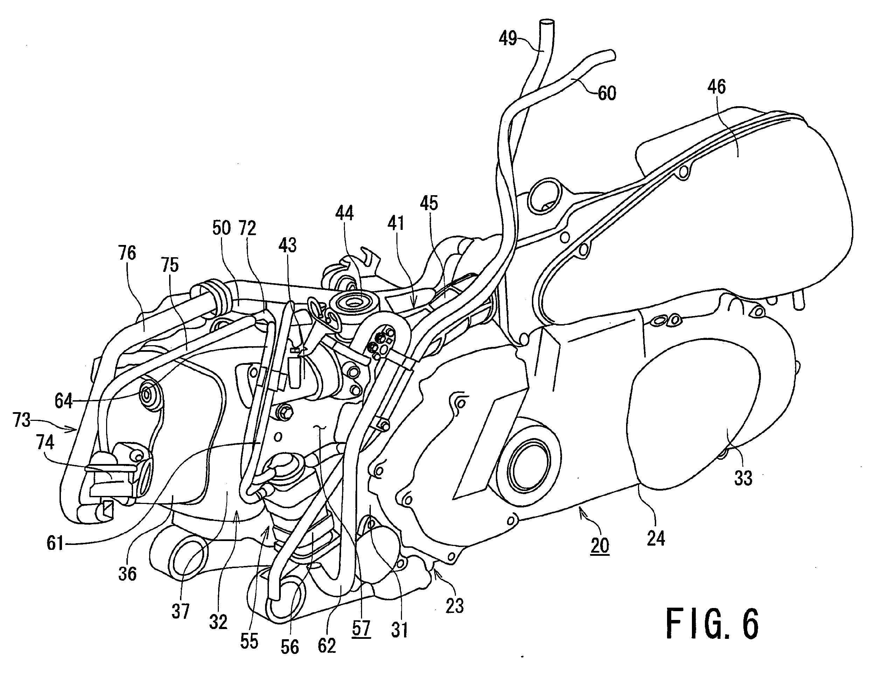

With reference to Figs. 6 to 8, the intake system 41 will be further described in detail. The intake port is opened in a left side surface at a left upper corner of the cylinder head 35. The intake pipe 43 connected to the intake port has a curved shape extending outward in the vehicle width direction and then extending rearward. On a plan view of the vehicle in Figs. 5 and 7, the intake system 41 is arranged in a position biased leftward of the vehicle with respect to a cylinder axis O of the cylinder assembly 32, thereby avoiding interference with a bottom surface of the article housing box 28 (Figs. 1 and 2) provided above the intake system 41. Thus, the article housing box 28 can be provided in a low position to lower a seat surface of the seat 27 disposed above the article housing box 28, thereby providing a satisfactory foot resting comfort of a rider during the stop time of the vehicle.

As shown in Figs. 4 and 5, the exhaust system 42 includes an exhaust pipe 51 connected to an exhaust port, not shown, formed in the cylinder head 35, and a muffler 52 connected to a downstream end of the exhaust pipe 51. The exhaust pipe 51 extends downward of the vehicle body from a lower surface of the cylinder head 35, curves toward one side in the vehicle width direction, and then extends rearward of the vehicle through one side of the engine 23. In the described embodiment, the exhaust pipe 51 and the muffler 52 are arranged on the right side in the vehicle width direction. The muffler 52 is covered with a muffler cover 53, and secured via a muffler bracket 54 to a rear portion of a right side surface of the crankcase 31 of the engine 23 on the right side in the vehicle width direction. As mentioned above and as shown in Figs. 1 and 2, the exhaust system 42 is configured to be swingable, together with the intake system 41, around the pivot axis 21 vertically of the vehicle in synchronization with the engine unit 20.

As shown in Figs. 2, 3 and 6, in the scooter-type motorcycle 10 of the present embodiment, a fuel evaporation gas discharge suppression device is provided that suppresses the discharge of a fuel evaporation gas generated in the fuel tank 29, for example, during the engine operation stop time, to the outside of the vehicle. The fuel evaporation gas discharge suppression device 55 includes a canister 56 that temporality adsorbs the fuel evaporation gas generated in the fuel tank 29 and purges (emits) the gas into the intake system 41.

The canister 56 is disposed in a space 57 formed on one side portion, that is a side of the intake system 41 (left side of the vehicle), of the cylinder assembly 32 and at a front of the transmission casing 33 in the vehicle body. Thus, the canister 56 is located on the side opposite to the exhaust system 42 with the cylinder assembly 32 therebetween, and thus, heat from the exhaust pipe 51 and the muffler 52 of the exhaust system 42 is blocked by the cylinder assembly 32, thereby preventing the heat from transferring to the canister 56.

The canister 56 is mounted to the engine suspension bracket 18 of the vehicle body frame 11 using the canister bracket 58, proximal to and immediately above the pivot axis 21 that is the center of a swinging motion of the engine unit 20 on the side view of the vehicle. Further, the canister 56 is located so that an upper end thereof is positioned below a lower end of the intake system 41 (particularly, the carburetor 44).

The portion above the canister 56 in the intake system 41, in which components such as the intake pipe 43 and the carburetor 44 are disposed, is positioned above the pivot axis 21, and hence, that portion moves along a substantially horizontal swinging path when the engine unit 20 swings. Therefore, as described above, since the canister 56 is located in the vicinity of and immediately above the pivot axis 21 and below the intake system 41, the canister 56 can be prevented from coming into contact with the intake system 41 even when the engine unit 20 swings. The canister 56 is arranged under the intake system 41 in the space 57, thereby allowing effective use of a dead space.

The canister 56 is located with the longitudinal direction thereof being directed in the vertical direction of the vehicle, and mounted to the engine suspension bracket 18 of the vehicle body frame 11 with an upper portion of the canister 56 being tilted forward of the vehicle. According to such arrangement, the interference between the canister 56 and peripheral components can be prevented even if the engine unit 20 swings in the vertical direction of the vehicle during the driving of the vehicle. More specifically, the transmission casing 33 is disposed on the rear side of the canister 56, and if the front end portion of the transmission casing 33 moves close to the canister 56 by the swinging motion of the engine unit 20, the canister 56 and the transmission casing 33 do not interfere with each other because the canister 56 is tilted forward.

As shown in Figs. 2, 6 and 10, a surge hose 60 from the fuel tank 29 is connected to a rear surface of an upper portion of the canister 56, and the fuel evaporation gas generated in the fuel tank 29 is introduced into the canister 56 and adsorbed by the activated carbon 59 in the canister 56.

A purge hose 61 communicating with the carburetor 44 of the intake system 41 is connected to a front surface of the upper portion of the canister 56, and a purge valve 63 described later serves to switch the communication and blocking between the inside of the canister 56 and the intake system 41 (carburetor 44). A canister air hose 62 having one end opened to atmosphere is connected to a lower portion of the canister 56, and the inside of the canister 56 always communicates with outside air.

The canister 56 includes the purge valve 63 at a top. The purge valve 63 includes a canister vacuum hose 64 connecting a diaphragm upper chamber 66A thereof and the intake system 41 (intake pipe 43).

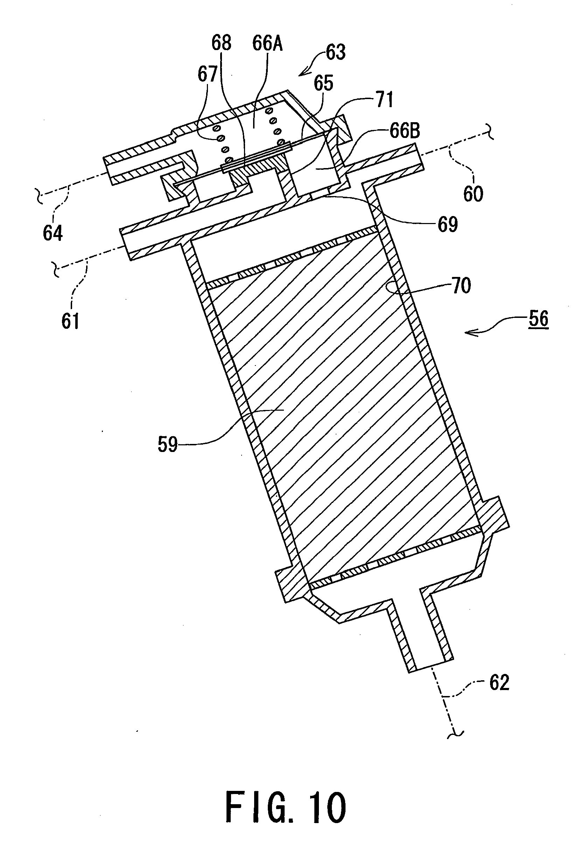

As shown in Fig. 10, the purge valve 63 is configured so that a diaphragm 65 is provided to divide between a diaphragm upper chamber 66A and a diaphragm lower chamber 66B, a spring 67 that urges the diaphragm 65 is placed in the diaphragm upper chamber 66A, and a valve body 68 is secured to the diaphragm 65. The diaphragm lower chamber 66B communicates with a housing chamber 70 housing the activated carbon 59 through a communication hole 69. The valve body 68 is pressed against a valve seat 71 by action of a biasing force of the spring 67 to block the communication between the diaphragm lower chamber 66B and the purge hose 61 (i.e., to close the purge valve 63). The diaphragm upper chamber 66A communicates with the canister vacuum hose 64.

The purge valve 63 is always closed by the biasing force of the spring 67. By means of an intake negative pressure acting from the canister vacuum hose 64 on the diaphragm upper chamber 66A, the diaphragm 65 is moved against the biasing force of the spring 67, and thus, the valve body 68 is separated from the valve seat 71 to thereby open the purge valve 63. In the opening state of the purge valve 63, the fuel evaporation gas adsorbed by the activated carbon 59 in the canister 56 is purged (emitted), flows in the purge hose 61 through the communication hole 69 and the diaphragm lower chamber 66B, and is supplied to the intake system 41 (carburetor 44).

According to the manner described above, with reference to Figs. 2 and 6, the fuel evaporation gas adsorbed in the canister 56 during stop of the engine 23 is purged into the carburetor 44 of the intake system 41 during the operation of the engine 23, sucked into a combustion chamber of the engine 23 together with premixed air and burned. This operation suppresses emission of the fuel evaporation gas generated in the fuel tank 29 to the outside of the vehicle.

As shown in Fig. 7, the purge hose 61 is connected to the carburetor 44 of the intake system 41 and communicated with an intake passage (not shown) of the carburetor 44 on a downstream side of a throttle valve, now shown, disposed in the intake passage.

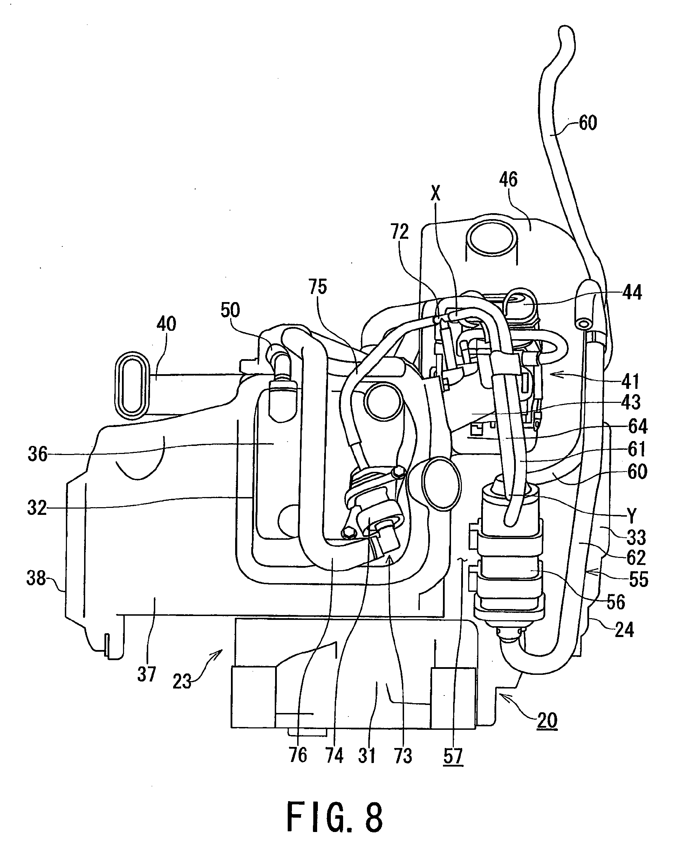

As shown in Fig. 8, the canister vacuum hose 64 is disposed adjacent to and substantially in parallel with the purge hose 61, connected to a three-way joint 72 mounted to the intake pipe 43, and introduces negative pressure generated in the intake passage on the downstream side of the carburetor 44 into the diaphragm upper chamber 66A in the purge valve 63 of the canister 56. A secondary air vacuum hose 75 as another negative pressure hose for introducing intake negative pressure into a diaphragm chamber, not shown, in the air cut valve 74 of a secondary air supply device 73 is connected to one remaining end of the three-way joint 72.

The secondary air supply device 73 is configured so that when exhaust pulsation brings negative pressure in an exhaust port of the cylinder head 35 of the engine 23, a lead valve, not shown, is opened to thereby introduce fresh air (secondary air) from a secondary air hose 76 (see Figs. 7 and 8) into the exhaust port. Thus, oxygen is supplied into exhaust air to cause oxidation reaction of HC or CO in the exhaust air, or promote the action of a catalyst to reduce harmful emissions. However, for example, when the throttle valve is fully closed in a high revolution state of the engine 23 as in rapid deceleration, the intake negative pressure is increased to cause a rich air/fuel ratio. Thus, if secondary air is supplied into the exhaust air in this state, after-fire may occur to damage the catalyst or the like.

Then, the air cut valve 74 is provided to block the secondary air from the secondary air hose 76 when the intake negative pressure higher than predetermined intake negative pressure is generated. The air cut valve 74 is always opened, and when an excessive negative pressure is generated, the excessive negative pressure acts through the secondary air vacuum hose 75 on the diaphragm chamber in the air cut valve 74, and the diaphragm is thereby moved to close the air cut valve 74. According to this operation, the supply of the secondary air from the secondary air hose 76 to the exhaust port can be blocked.

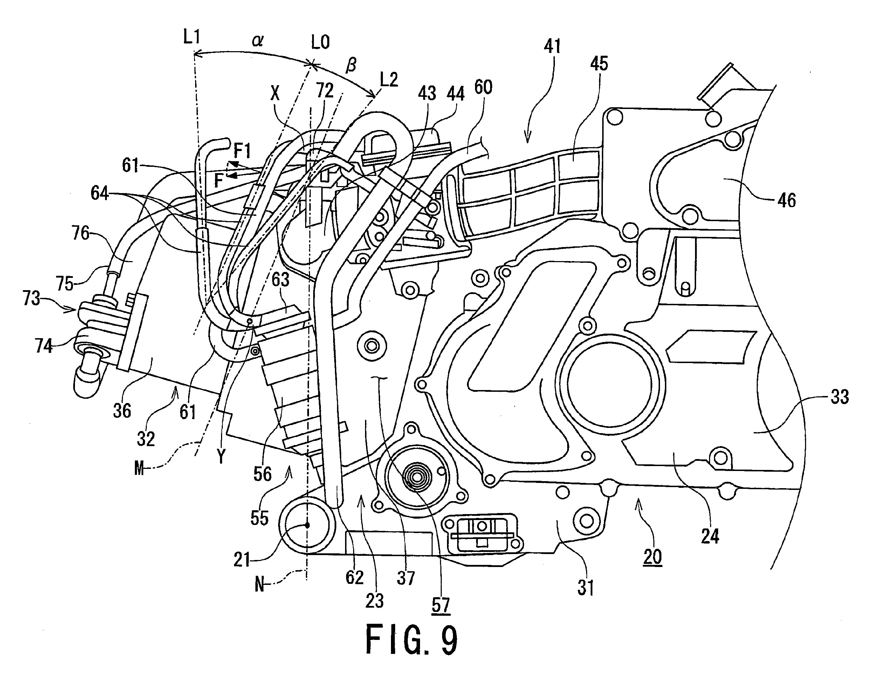

As shown in Figs. 2 and 9, in the present embodiment, the canister vacuum hose 64 is disposed in front of a virtual line M connecting an intake system side connection end (that is, an end on a side of the three-way joint) X and a canister side connection end (that is, an end on a side of the purge valve) Y in the vehicle. Furthermore, since the essential portions of the canister vacuum hose 64 are provided substantially linearly in parallel with the virtual line M on side view of the vehicle in an empty state of the vehicle, the canister vacuum hose 64 can be arranged in a shortest path, and the canister vacuum hose 64 can be housed in a narrow space above the canister 56, thereby preventing the canister vacuum hose 64 from significantly vibrating together with the purge hose 61 and interfering with, particularly, the first rear frame 14A of the vehicle body frame 11 when the engine unit 20 swings.

Furthermore, in Fig. 9, reference character L0 denotes a position of the canister vacuum hose 64 in the empty state of the vehicle, reference character L1 denotes a position of the canister vacuum hose 64 in the maximum pressure state of the rear cushion unit 26 (maximum pressure state of the vehicle), and reference character L2 denotes a position of the canister vacuum hose 64 in the maximum extension state of the rear cushion unit 26 (maximum extension state of the vehicle).

On the side view of the vehicle in Fig. 9, the canister vacuum hose 64 and the purge hose 61 disposed adjacent to and substantially in parallel with each other are provided to intersect a virtual line N connecting the intake system side connection end X of the canister vacuum hose 64 in the empty state of the vehicle and the pivot axis 21 that is the center of a swinging motion of the engine unit 20. Thus, component of force F1 orthogonal to the longitudinal direction of the hoses (the canister vacuum hose 64 and the purge hose 61), of an inertial force F acting on the canister vacuum hose 64 and the purge hose 61 when the engine unit 20 swings, constitutes a force to move the hoses. However, since the component of force F1 is smaller than the inertial force F, amplitude of vibration of the hoses is suppressed as compared to the case where the hoses (the canister vacuum hose 64 and the purge hose 61) are provided substantially in parallel with the virtual line N.

Furthermore, the engine unit 20 is provided so that an angle β formed between the position L0 of the canister vacuum hose 64 in the empty state of the vehicle and the position L2 of the canister vacuum hose 64 in the maximum extension state of the vehicle is smaller than an angle α formed between the position L0 of the canister vacuum hose 64 in the empty state of the vehicle and the position L1 of the canister vacuum hose 64 in the maximum pressure state of the vehicle on side view of the vehicle. Accordingly, even if the canister 56 is arranged to be tilted forward with a small radius of curvature of the canister vacuum hose 64 on the side of the canister side connection end Y, the canister vacuum hose 64 is prevented from being crushed near the canister side connection end Y and blocking an inner passage when the engine unit 20 swings to be the maximum extension state of the vehicle.

It is further to be noted that although the purge hose 61 is provided in parallel with the canister vacuum hose 64, the deformation near the canister side connection end of the purge hose 61 is the same as that of the canister vacuum hose 64, thereby preventing the inner passage of the purge hose 61 from being blocked.

According to the embodiment of the present invention provided with the described configuration and arrangement, the following advantageous effects (1) to (11) will be attained.
(1) As shown in Fig. 4, the intake system 41 is disposed on the side opposite to the exhaust system 42 with the cylinder assembly 32 being located therebetween. As shown in Figs. 6 and 9, the canister 56 is disposed in the space 57 formed on one side that is the side of the intake system 41 in the cylinder assembly 32 and in front of the transmission casing 33 in the vehicle body. Therefore, the canister 56 can be spaced from the exhaust system 42, which can prevent the activated carbon 59 in the canister 56 from being heated to a high temperature to reduce adsorption performance of the fuel evaporation gas (HC, CO). In particular, since the cylinder assembly 32 is located between the exhaust system 42 and the canister 56, the transfer of high temperature atmosphere around the exhaust system 42 can be prevented and also the radiation heat from the exhaust system 42 can be prevented from being transferred to the canister 56.
(2) Since the canister 56 is located on one side that is the side of the intake system 41 in the cylinder assembly 32, the lengths of the purge hose 61 can be reduced, and the canister vacuum hose 64 connecting the canister 56 and the intake system 41 can be also reduced, thereby avoiding the interference between the purge hose 61 and the canister vacuum hose 64 and peripheral components even if the engine unit 20 and the intake system 41 are swung in the vertical direction of the vehicle, thus preventing damage to the purge hose 61 and the canister vacuum hose 64.
(3) Since the canister 56 is disposed in the vicinity of and immediately above the pivot axis 21 that is the center of a swinging motion of the engine unit 20, the canister 56 can be disposed around a region in the engine unit 20 with a small swing-motion range when the engine unit 20 swings. Therefore, the interference between the canister 56 and the engine unit 20 can be surely avoided.
(4) The intake system 41 that swings together with the engine unit 20 is located above the pivot axis 21 that is the center of a swinging motion of the engine unit 20. Accordingly, the swinging path of the intake system 41 mainly includes a substantially horizontal component, and in this state, the upper end of the canister 56 takes a position under the lower end of the intake system 41 (in particular, the lower end of the carburetor 44). Thus, when the intake system 41 swings substantially in the horizontal direction in an upper space in the canister 56 as described above, the interference between the intake system 41 and the canister 56 can be effectively avoided.
(5) Since the intake system 41 is located above the canister 56 in the vehicle body, the purge hose 61 connected to the intake system 41 can be connected to the upper portion of the canister 56 to reduce a length of the purge hose 61. Therefore, the swinging range of the purge hose 61 that swings together with the engine unit 20 can be reduced, and the interference between the purge hose 61 and peripheral components can be prevented, thereby avoiding damage to the purge hose 61.
(6) Since the canister air hose 62 is connected to a lower portion of the canister 56, if water enters from an end of the canister air hose 62 opened to the atmosphere, the entering water remains on a bottom in the canister 56. Therefore, the water does not adhere to the activated carbon 59 (Fig. 10) in the canister 56.
(7) As shown in Figs. 2 and 9, since the canister 56 is mounted to the engine suspension bracket 18 of the vehicle body frame 11 with the upper portion thereof being tilted forward of the vehicle, the interference between the canister 56 and peripheral components, particularly, a front end of the transmission casing 33 due to swinging of the engine unit 20 in the vertical direction of the vehicle during the driving of the vehicle can be prevented from causing.
(8) Since the purge hose 61 and the canister vacuum hose 64 connected to the canister 56 are provided adjacent to and substantially in parallel with each other, the purge hose 61 and the canister vacuum hose 64 that vibrate when the engine unit 20 swings can be bundled together, thus realizing a compact structure.
(9) In the present invention, the canister vacuum hose 64 is disposed in front of the virtual line M connecting the intake system side connection end X and the canister side connection end Y in the vehicle, and the essential portions of the canister vacuum hose 64 are provided substantially linearly in parallel with the virtual line M on side view of the vehicle in the empty state of the vehicle. Accordingly, the canister vacuum hose 64 can be arranged in the shortest path, and the canister vacuum hose 64 can be also housed in a narrow space above the canister 56. This arrangement can prevent the canister vacuum hose 64 from significantly vibrating together with the purge hose 61 to interfere with peripheral components (particularly, the first rear frame 14A) when the engine unit 20 swings, and further prevents the canister vacuum hose 64 from being significantly bent and damaged near the intake system side connection end X and the canister side connection end Y to cause leakage of the fuel evaporation gas.
(10) On the side view of the vehicle, the purge hose 61 and the canister vacuum hose 64 are provided to intersect the virtual line N connecting the intake system side connection end X of the canister vacuum hose 64 in the empty state of the vehicle and the pivot axis 21 of the engine unit 20. Thus, the component of force F1 of the inertial force F acting on the purge hose 61 and the canister vacuum hose 64 when the engine unit 20 swings provides the vibration to the purge hose 61 and the canister vacuum hose 64. Moreover, since the component of force F1 is smaller than the inertial force F, the amplitude of the vibration of the purge hose 61 and the canister vacuum hose 64 can be suppressed as compared to the case where the hoses are provided substantially in parallel with the virtual line N.
(11) The engine unit 20 is set so that the angle β formed between the position L0 in the empty state of the vehicle of the canister vacuum hose 64 and the position L2 in the maximum extension state of the vehicle is smaller than the angle α formed between the position L0 in the empty state of the vehicle of the canister vacuum hose 64 and the position L1 in the maximum pressure state of the vehicle on the side view of the vehicle. Accordingly, the canister vacuum hose 64 can be prevented from being significantly bent and deformed to block the communication in the canister vacuum hose 64 having a small inner diameter when the engine unit 20 swings (particularly, in the maximum extension state of the vehicle). Thus, blocking of communication in the canister vacuum hose 64 is prevented, thereby avoiding unnecessary closing of the purge valve 63 of the canister 56, and allowing the fuel evaporation gas adsorbed by the activated carbon 59 in the canister 56 to be satisfactorily purged into the carburetor 44 of the intake system 41.

It is finally to be noted that the present invention is not limited to the described embodiment and modes and that changes may be made without departing from the scope of the appended claims.

## Claims

1. A scooter-type motorcycle (10) comprising:
a vehicle body to which a vehicle body frame (11) is mounted;
an engine unit (20) supported to be swingable in a vertical direction of a vehicle with respect to the vehicle body frame (11), the engine unit (20) integrally including an engine (23) and a transmission (24), the engine (23) being provided with a crankcase (31) and a cylinder assembly (32) extending forward of the vehicle from the crankcase (31);
a fuel tank (29) mounted to the vehicle body frame (11) above the engine unit (20) in the vehicle body (11);
a fuel evaporation gas discharge suppression device (55) that suppresses discharge of a fuel evaporation gas generated in the fuel tank (29); and
an intake system (41) and an exhaust system (42) connected to a cylinder head (35) of the cylinder assembly (32), the intake system (41) and the exhaust system (42) extending rearward of the vehicle on an opposite side in a vehicle width direction with the cylinder assembly (32) being provided therebetween,
wherein the transmission (24) has a casing (33) extending rearward of the vehicle body from the same side as the intake system (41) on one end side of the crankcase (31) in the vehicle width direction,
the fuel evaporation gas discharge suppression device (55) includes a canister (56) that temporarily adsorbs the fuel evaporation gas and emits the gas to the intake system (41), and the canister (56) is disposed in a space (57) formed on one side that is a side of the intake system (41) in the cylinder assembly (32) and at a front of the transmission casing (33) in the vehicle,
the canister (56) is mounted to the vehicle body frame (11) in a vicinity of and immediately above a center (21) of a swinging motion of the engine unit (20) on a side view of the vehicle with an upper end of the canister (56) being located below a lower end of the intake system (41),
the canister (56) is mounted with a longitudinal direction thereof being directed in the vertical direction of the vehicle, the fuel tank (29) and the canister (56) are connected to each other through a surge hose (60), and the intake system (41) and the canister (56) are connected to each other through a purge hose (61), the surge hose (60) and the purge hose (61) being connected to an upper portion of the canister (56), and a canister air hose (62) having one end opened to atmosphere is connected, at the other end, to a lower portion of the canister (56), and the canister (56) is mounted to the vehicle body frame (11) with an upper portion thereof being tilted forward of the vehicle,
**characterized in that** the canister (56) includes a purge valve (63) at a top portion thereof, the purge valve (63) includes a canister vacuum hose (64) connecting a diaphragm chamber thereof and the intake system (41), and the canister vacuum hose (64) is provided adjacent to and substantially in parallel with the purge hose (61).

2. The scooter-type motorcycle (10) according to claim 1, wherein the canister vacuum hose (64) is located at the front of a virtual line connecting an intake system side connection end and a canister side connection end in the vehicle, and essential portions thereof are provided in parallel with the virtual line on side view of the vehicle in an empty state of the vehicle.

3. The scooter-type motorcycle (10) according to claim 1 or 2, wherein the purge hose (61) and the canister vacuum hose (64) are provided to intersect a virtual line connecting the intake system side connection end of the canister vacuum hose (64) in the empty state of the vehicle and the center (21) of the swinging motion of the engine unit on side view of the vehicle.

4. The scooter-type motorcycle according to any one of claims 1 to 3, wherein the engine unit (20) is set with an angle β formed between a position of the canister vacuum hose (64) in the empty state of the vehicle and a position of the canister vacuum hose (64) in the maximum extension state of the vehicle being smaller than an angle a formed between the position of the canister vacuum hose (64) in the empty state of the vehicle and a position of the canister vacuum hose (64) in a maximum pressure state of the vehicle on side view of the vehicle.

## Patentansprüche

1. Motorroller (10) umfassend:
eine Fahrzeugkarosserie, an der ein Fahrzeugkarosserierahmen (11) angebracht ist;
eine Motoreinheit (20), die in vertikaler Richtung eines Fahrzeugs bezüglich des Fahrzeugkarosserierahmens (11) schwenkfähig gelagert ist, wobei die Motoreinheit (20) in integraler Weise einen Motor (23) und ein Getriebe (24) enthält, von denen der Motor (23) mit einem Kurbelgehäuse (31) und einer Zylinderanordnung (32), die sich ausgehend von dem Kurbelgehäuse (31) in Vorwärtsrichtung des Fahrzeugs erstreckt, ausgestattet ist;
einen Kraftstofftank (29), der an dem Fahrzeugkarosserierahmen (11) oberhalb der Motoreinheit (20) in der Fahrzeugkarosserie (11) angebracht ist;
eine Kraftstoff-Verdampfungsgas-Austrittssperrvorrichtung (55), die den Austritt von Kraftstoff-Verdampfungsgas unterdrückt, welches in dem Kraftstofftank (29) entsteht; und
ein Einlasssystem (41) und ein Auslasssystem (42), die mit einem Zylinderkopf (35) der Zylinderanordnung (32) verbunden sind, wobei das Einlasssystem (41) und das Auslasssystem (42) sich in Fahrzeug-Breitenrichtung hinten an dem Fahrzeug auf einer der abgewandten Seiten mit der dazwischen befindlichen Zylinderanordnung (32) erstrecken, wobei das Getriebe (34) ein Gehäuse (33) besitzt, welches sich von derselben Seite wie das Einlasssystem (41) an ei - ner Endseite des Kurbelgehäuses (31) in Fahrzeug-Breitenrichtung zur Rückseite der Fahrzeugkarosserie erstreckt,
die Kraftstoff-Verdampfungsgas-Austrittssperrvorrichtung (55) einen Filterbehälter (56) enthält, der das Kraftstoff-Verdampfungsgas vorübergehend adsorbiert und das Gas in das Einlasssystem (41) einleitet, und der Filterbehälter (56) in einem Raum (57) angeordnet ist, der auf einer Seite, nämlich einer Seite des Einlasssystems (41) in der Zylinderanordnung (32) und vor dem Getriebegehäuse (32) innerhalb des Fahrzeugs gebildet ist,
wobei der Filterbehälter (56) an dem Fahrzeugkarosserierahmen (11) in der Nähe von und unmittelbar oberhalb eines Zentrums (21) einer Schwenkbewegung der Motoreinheit (20) in einer Seitenansicht des Fahrzeugs angebracht ist, wobei ein oberes Ende des Filterbehälters (56) sich unterhalb eines unteren Endes des Einlasssystems (41) befindet,
der Filterbehälter (56) so angebracht ist, dass seine Längsrichtung in verti - kaler Richtung des Fahrzeugs orientiert ist, der Kraftstofftank (29) und der Filterbehälter (56) miteinander über einen Einleitschlauch (60) verbunden sind, und das Einlasssystem (41) und der Filterbehälter (56) miteinander über einen Entlüftungsschlauch (61) verbunden sind, der Einleitschlauch (60) und der Entlüftungsschlauch (61) mit einem oberen Bereich des Filterbehälters (56) verbunden sind, und ein Filterbehälter-Luftschlauch (69), der mit einem Ende zur Atmosphäre hin offen ist, mit dem anderen Ende an einen unteren Bereich des Filterbehälters (56) angeschlossen ist, und der Filterbehälter (56) an dem Fahrzeugkarosserierahmen (11) so angebracht ist, dass sein oberer Bereich in Vorwärtsrichtung des Fahrzeugs geneigt ist,
**dadurch gekennzeichnet, dass**
der Filterbehälter (56) in seinem oberen Bereich ein Entlüftungsventil (63) aufweist, welches einen Filterbehälter-Vakuumschlauch (64) enthält, der an eine Membrankammer von ihm und an das Einlasssystem (41) angeschlossen ist, und der Filterbehälter-Vakuumschlauch (64) benachbart zu und im Wesentlichen parallel zu dem Entlüftungsschlauch (61) vorgesehen ist.

2. Motorroller (10) nach Anspruch 1, bei dem der Filterbehälter-Vakuumschlauch (64) sich vor einer virtuellen Linie befindet, welche ein einlasssystemseitiges Verbindungsende und ein filterbehälterseitiges Verbindungsende in dem Fahrzeug verbindet, und wesentliche Teile von ihm parallel zu der virtuellen Linie verlaufen, betrachtet bei einer Seitenansicht des Fahrzeugs in dessen Leerzustand.

3. Motorroller (10) nach Anspruch 1 oder 2, bei dem der Entlüftungsschlauch (61) und der Filterbehälter-Vakuumschlauch (64) derart vorgesehen sind, dass sie eine virtuelle Linie schneiden, welche ein einlasssystemseitiges Verbindungsende des Filterbehälter-Vakuumschlauchs (64) im Leerzustand des Fahrzeugs und das Zentrum (21) der Schwenkbewegung der Motoreinheit bei Seitenansicht des Fahrzeugs verbindet.

4. Motorroller nach einem der Ansprüche 1 bis 3, bei dem die Motoreinheit (20) derart eingerichtet ist, dass ein Winkel β, der gebildet wird zwischen einer Stelle des Filterbehälter-Vakuumschlauchs (64) im Leerzustand des Fahrzeugs und einer Stelle des Filterbehälter-Vakuumschlauchs (64) im maximalen Erstreckungszustands des Fahrzeugs, kleiner ist als ein Winkel α, der gebildet wird zwischen der Stelle des Filterbehälter-Vakuumschlauchs (64) im Leerzustand des Fahrzeugs und einer Stelle des Filterbehälter-Vakuumschlauchs (64) in maximal niedergedrücktem Zustand des Fahrzeugs bei dessen Betrachtung von der Seite.

## Revendications

1. Motocyclette de type scooter (10), comprenant :
une carrosserie de véhicule sur laquelle un cadre de carrosserie de véhicule (11) est monté ;
un groupe moteur (20) supporté de manière à pouvoir basculer dans une direction verticale d'un véhicule par rapport au cadre de carrosserie de véhicule (11), le groupe moteur (20) incluant d'un seul tenant un moteur (23) et une transmission (24), le moteur (23) étant doté d'un carter (31) et d'un ensemble cylindre (32) s'étendant vers l'avant du véhicule à partir du carter (31) ;
un réservoir de carburant (29) monté sur le cadre de carrosserie de véhicule (11) au-dessus du groupe moteur (20) dans la carrosserie de véhicule (11) ;
un dispositif de suppression d'échappement de gaz d'évaporation de carburant (55) qui supprime l'échappement d'un gaz d'évaporation de carburant généré dans le réservoir de carburant (29), et
un système d'admission (41) ainsi qu'un système d'échappement (42) reliés à une culasse (35) de l'ensemble cylindre (32), le système d'admission (41) et le système d'échappement (42) s'étendant vers l'arrière du véhicule sur un côté opposé dans une direction de largeur de véhicule, l'ensemble cylindre (32) étant prévu entre eux,
dans laquelle la transmission (24) comporte une carcasse (33) s'étendant vers l'arrière de la carrosserie de véhicule à partir du même côté que le système d'admission (41) sur un côté d'extrémité du carter (31) dans la direction de largeur de véhicule ;
le dispositif de suppression d'échappement de gaz d'évaporation de carburant (55) inclut un bidon (56) qui adsorbe temporairement le gaz d'évaporation de carburant et émet le gaz vers le système d'admission (41), et le bidon (56) est disposé dans un espace (57) formé sur un côté qui est un côté du système d'admission (41) dans l'ensemble cylindre (32) et sur le devant de la carcasse de transmission (33) dans le véhicule ;
le bidon (56) est monté sur le cadre de carrosserie de véhicule (11) dans un voisinage et immédiatement au-dessus d'un centre (21) d'un mouvement de basculement du groupe moteur (20) sur une vue latérale du véhicule, l'extrémité supérieure du bidon (56) se trouvant au-dessous d'une extrémité inférieure du système d'admission (41) ;
le bidon (56) est monté avec une direction longitudinale dirigée dans la direction verticale du véhicule, le réservoir de carburant (29) et le bidon (56) sont connectés l'un à l'autre par le biais d'une durite de poussée (60), et le système d'admission (41) et le bidon (56) sont reliés l'un à l'autre par le biais d'une durite de purge (61), la durite de poussée (60) et la durite de purge (61) étant reliées à une partie supérieure du bidon (56), et une durite d'air de bidon (62) présentant une extrémité ouverte à l'atmosphère est reliée, au niveau de l'autre extrémité, à une partie inférieure du bidon (56), et le bidon (56) est monté sur le cadre de carrosserie de véhicule (11), une partie supérieure de celui-ci étant basculée vers l'avant du véhicule,
**caractérisée en ce que**
le bidon (56) inclut une soupape de purge (63) au niveau de sa partie supérieure, la soupape de purge (63) inclut une durite de vide de bidon (64) reliant une enceinte à diaphragme de celui-ci et le système d'admission (41), et la durite de vide de bidon (64) est prévue à proximité de la durite de purge (61) et pratiquement parallèlement à celle-ci.

2. Motocyclette de type scooter (10) selon la revendication 1, dans laquelle la durite de vide de bidon (64) se trouve sur le devant d'une ligne virtuelle reliant une extrémité de raccordement côté système d'admission et une extrémité de raccordement côté bidon dans le véhicule, et les parties essentielles de celle-ci sont prévues parallèlement à la ligne virtuelle sur une vue latérale du véhicule dans un état vide du véhicule.

3. Motocyclette de type scooter (10) selon la revendication 1 ou 2, dans laquelle la durite de purge (61) et la durite de vide de bidon (64) sont prévues de manière à couper une ligne virtuelle raccordant l'extrémité de raccordement côté système d'admission de la durite de vide de bidon (64) dans l'état vide du véhicule et le centre (21) du mouvement de basculement du groupe moteur sur une vue latérale du véhicule.

4. Motocyclette (10) de type scooter selon l'une quelconque des revendications 1 à 3, dans laquelle le groupe moteur (20) est réglé suivant un angle β formé entre une position de la durite de vide de bidon (64) dans l'état vide du véhicule et une position de la durite de vide de bidon (64) dans l'état d'extension maximal du véhicule, celui-ci étant plus petit qu'un angle α formé entre la position de la durite de vide de bidon (64) dans l'état vide du véhicule et une position de la durite de vide de bidon (64) dans un état de pression maximale du véhicule sur une vue latérale du véhicule.
